# EUROPEAN PATENT APPLICATION

(11) **EP 2 554 962 A1**
(43) Date of publication of application: **06.02.2013**
(21) Application number: 11176213.4
(22) Date of filing: 01.08.2011
(51) Int. Cl.: G01L 1/16, G01K 11/26, G01M 5/00

(54) **Wireless saw differential strain gauge**

(71) Applicant: Honeywell Romania S.R.L., 014459 Bucharest (RO)
(72) Inventor: Cobianu, Cornel, 061672 Bucharest (RO); Georgescu, Ion, 023732 Bucharest (RO); Bostan, Cazimir, 061724 Bucharest (RO)
(74) Representative: Buckley, Guy Julian

(57) **Abstract**

A SAW sensor assembly for detecting strain of an asset being monitored. Two chips may have one or more SAW sensors. The chips may be bonded together as one package. One chip may be on an asset of which strain is to be monitored. The other chip may be kept free of strain by being bonded to the chip subject to strain with an elastic type of bonding material. The chips may be originated on wafers. A first wafer may be diced into individual chips. A second wafer of chips may have bonding material applied to perimeters of its chips. The chips from the first wafer may individually be placed on each of the chips of the second wafer such that the perimeter based material bonds each pair of chips. Each pair of chips may be diced from the second wafer. Other configuration and packaging schemes may be utilized.

## Description

### Background

The present disclosure pertains to sensors and particularly to surface acoustic wave sensors. Also, the disclosure pertains to packaging of surface acoustic wave sensors.

### Summary

The disclosure reveals a surface acoustic wave (SAW) sensor assembly for detecting stress or strain of an asset being monitored. Two chips may have one or more SAW sensors. The chips may be bonded together as one package. One chip may be mounted on an asset of which strain or stress is to be measured or monitored. The other chip may be kept free of stress by being bonded to the chip subject to stress or strain with an elastic type of bonding material. The chips may be originated on wafers. A first wafer may be diced into individual chips. A second wafer of chips may have bonding material applied to perimeters of its chips. The chips from the first wafer may individually be placed on each of the chips of the second wafer such that the perimeter based material bonds each pair of chips. Each pair of chips may be diced from the second wafer. Other configuration and packaging schemes may be utilized.

### Brief Description of the Drawing

Figure 1 is a diagram of a surface acoustic wave (SAW) resonator sensor and an antenna formed on a first chip;
Figure 2 is a diagram of two SAW resonator sensors and an antenna formed on a second chip;
Figures 3a and 3b are diagrams of a wafer of chips like the chip of Figure 1 and a wafer of chips like the chip of Figure 2, and corresponding covers for the wafers that may result in covered chip packages;
Figure 4 is a diagram of a package of a first chip having a SAW resonator sensor bonded to a second chip having two SAW resonator sensors;
Figure 5 is a diagram of the package of Figure 4 encased in a coating of protective material;
Figure 6 is a diagram of a cover bonded to the chip of Figure 1 to form a covered chip package;
Figure 7 is a diagram of a cover bonded to the chip of Figure 2 to form a covered chip package;
Figure 8 is a diagram of two covered chip packages bonded at their covers to result in a package-to-package packaging;
Figure 9 is a diagram of a resultant package of Figure 8 encased in a coating of protective material; and
Figures 10a and 10b reveal an approach for fabricating a SAW strain gauge.

### Description

Structural health monitoring (SHM) of assets in civil engineering business (like buildings, bridges, storm water drain reinforced concrete pipeline, and so forth) appears to be emerging as an important control technology and business opportunity aiming to preserve the safe operation of assets and eliminate any risk of loosing human lives or affecting the quality of the environment due to different polluting agents. For example, structural health monitoring of bridges may prevent accidents coming from a bridge breaking down, or may prevent water contamination due to a loss of mechanical integrity in storm water reinforced concrete pipes, which may then allow different potential industrial contaminants to enter the drain water system. In addition, in the control of industrial processes, the structural health monitoring of assets such as pumps, heat exchangers, burners, pipelines, and so on, appears more necessary for replacing the scheduled-based maintenance by condition-based maintenance (CBM) in order to save money and time. Similarly, in aerospace applications, the structural health monitoring approach appears necessary for keeping under control the health condition of virtually all critical components of airplanes. In the area of biomedical applications, monitoring people's health or a human body's reaction during fitness exercises may impose a use of miniaturized systems of sensors.

In order to preserve the quality of the environment, networks of sensor systems distributed on large areas may be needed for the surveillance of such assets as described above. A key requirement to the operation of SHM systems may be the robust operation of the sensing system itself. For such SHM applications, wireless and passive sensors systems may be considered, where the idea is to avoid any use of batteries, due to the risks associated with a delay in their replacement. For such systems, wireless sensors may be organized in networks, and they can communicate among themselves and with a central station which is collecting virtually all of the information, and make a decision, or communicate with a human operator for a final decision regarding a status of the system being monitored. This might be a future solution for the structural health monitoring approach.

Nowadays, in many structural health monitoring applications, a simple and easy way to implement a monitoring solution may be used where the operator has a hand held sensor reader which can interrogate the wireless passive sensor from a short distance (below 20 cm) by inductive coupling, by using the so called principle of near field communication (NFC), which appears to be starting to be implemented in many new cell phones, which can thus be used also as sensor readers. For such new structural health monitoring applications, new sensing principles and approaches for the realization of small miniaturized sensors with ultra low power consumption may be utilized.

The present disclosure may disclose a differential wireless passive surface acoustic wave (SAW) sensor for strain and temperature monitoring in different assets as indicated above. There may be piezoresistive strain gauges, which are attached (e.g., glued) to the substrate whose strain is to be monitored. Any stress developed in the substrate which is transmitted to a strain gauge may determine the change in the value of electrical resistance, due to both a change in the geometry of the resistance and its resistivity. Such strain gauges may be electrical power hungry and thus should be avoided in wireless applications, due to reasons mentioned above. The terms "stress" and "strain" may be used herein interchangeably.

An alternative approach may incorporate SAW strain gauges that have low power consumption and are very stress sensitive devices. For instance, in a particular case of torque stresses applied to a shaft, which can be decomposed in a tensile stress and compressive stress both tilted at 45 degrees with respect to normal axis to the shaft; the SAW resonator-type devices appear to be good wireless, passive torque sensors, with well-established temperature compensation and differential operation.

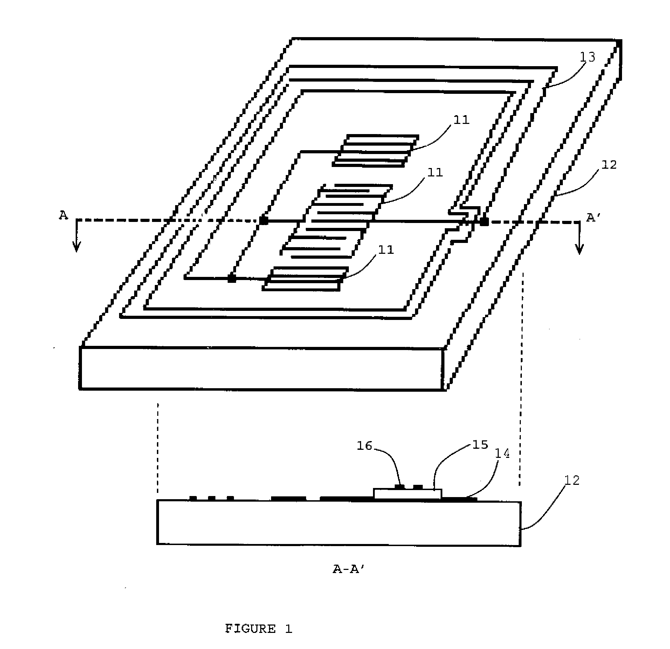

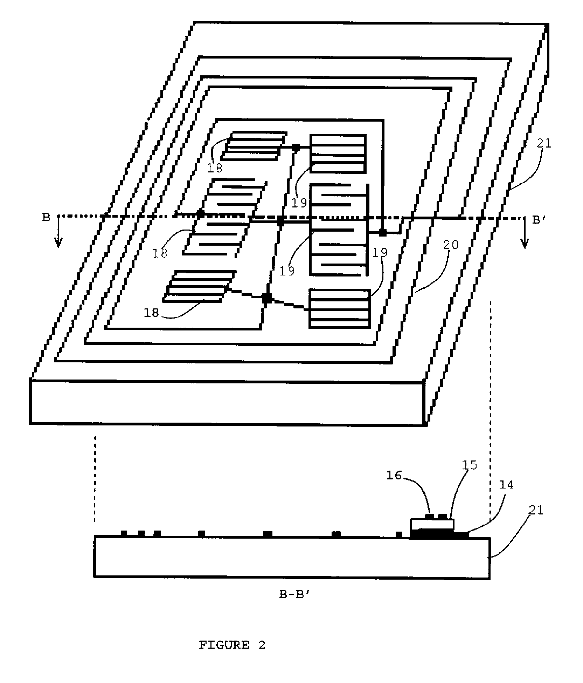

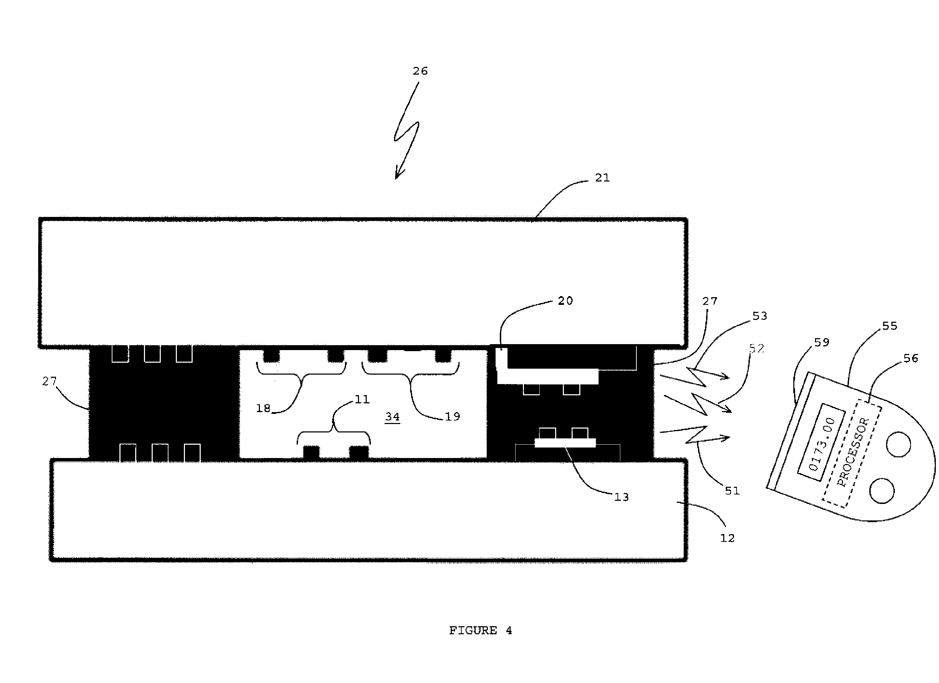

The present disclosure may reveal a temperature-compensated, wireless, passive, differential SAW strain gauge having temperature measurement capabilities, and an approach to build it. The frequency response of the strain sensor will not necessarily be diminished by the differential operation, as it could normally be the case. In order to obtain the beneficial differential behavior, one may fabricate the SAW strain gauge as a tandem of two SAW resonators 11 (Figure 1) and resonator 18 (Figure 2) on chips 12 and 21, respectively. Resonator 11 may be exposed to stress, while resonator 18 is not necessarily exposed to stress. Chips 12 and 21 may incorporate the same type of piezoelectric substrate and be oriented in the same crystallographic direction relative to each other, and where resonators 11 and 18 may get the same sensitivity to stress and temperature. By subtracting the frequency responses of resonator 11 and resonator 18, a stress difference response may thus be obtained. Resonator 11 and resonator 18 may have different resonance frequencies so that their responses can be easily discriminated in the frequency domain. The packaging of the two chips 12 and 21 may be provided in such a way that just chip 12 and its SAW resonator 11 is "feeling" the stress in the respective substrate of chip 12 and is shifting its resonance frequency accordingly, while the second resonator 18, located on chip 21, which may be regarded as a strain reference SAW resonator and is not necessarily exposed to any stress, by being separated from the first chip 12 (receiving the external stress). Chips 12 and 21 may be attached together but have stress isolation via an elastomeric adhesive and sealant material, such as room temperature vulcanizing (RTV) silicon, elastic sealant, or an elastic type of bonding material, which can form an attachment between chips 12 and 21. Situated or formed on chip 21, near the reference SAW resonator 18, may be another SAW resonator 19. Resonator 19 may have its own resonance frequency, which may be different from the resonant frequencies of resonators 11 and 18. Resonator 19 may have an X axis which is tilted at an appropriate angle (for example, about 18 degrees relative to the X axis, in the case of quartz ST) relative to the X axis of the strain reference SAW resonator 18. The crystal direction of the X axis of resonator 19 may have a minimum temperature coefficient of frequency. In a SAW tandem arrangement of chips 12 and 21, as shown in Figure 4, resonator 18 and resonator 19 may have their frequencies measured and a differential of their frequencies may indicate an ambient temperature of the chips. The frequency difference of resonators 11 and 18 which is used to indicate relative stress between chips 12 and 21 may be compensated in view of the determined ambient temperature of the chips.

Essentials of the present disclosure incorporate the following items. A differential SAW strain and temperature gauge may consist of a first chip 12 exposed to external stress and contain a first SAW resonator 11 and an on-chip antenna 13, a second chip 21, not exposed to stress, having a second SAW resonator 18 and a third SAW resonator 19, and an associated antenna 20, and an elastomeric sealant 27 separating the two chips being packaged.

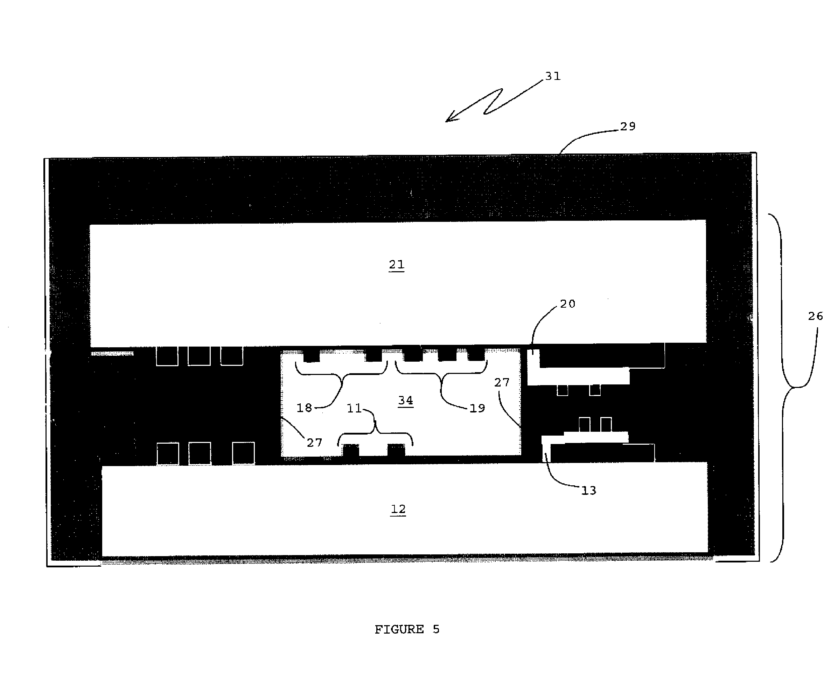

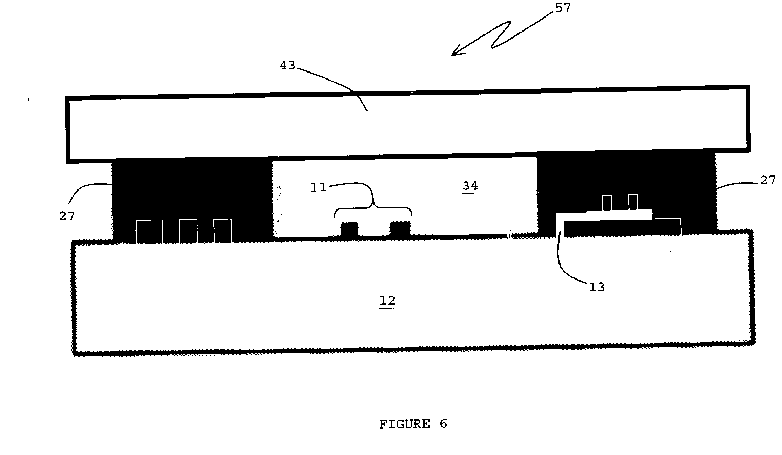

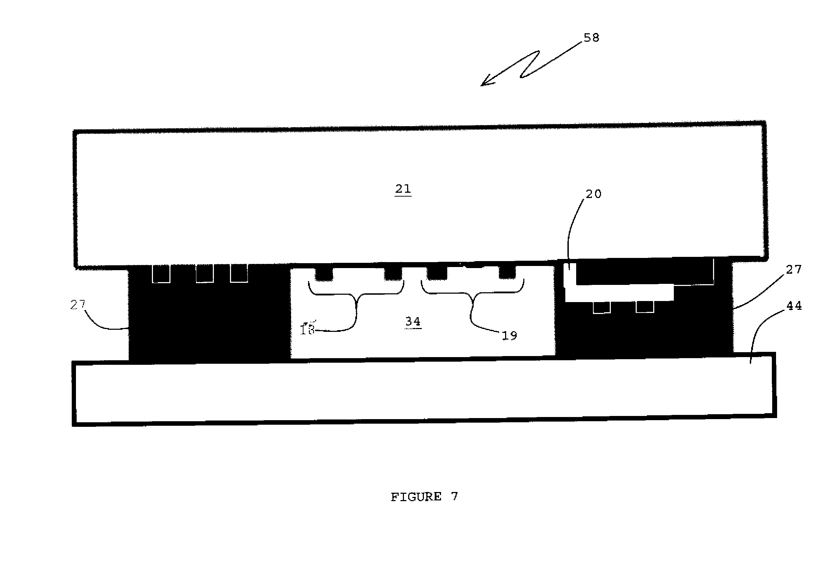

To review, the differential strain may be measured by using a difference of the frequency response of resonator 11 and the frequency response of resonator 18, which is stress-free. The ambient temperature may be measured by subtracting the frequency response of resonator 18 and resonator 19, both of them being stress free. The on-chip antenna 13 used for resonator 11 and the on-chip antenna 20 used for resonator 18 and resonator 19 may be located under a cover, with no metal line outside a cover. The cover for chip 12 and corresponding antenna 13 may be chip 21. The cover for chip 21 and corresponding antenna 20 may be chip 12. Figures 4 and 5 show examples of chips 12 and 21 where one is a cover for the other chip. Alternatively, a cover chip 43 may cover the chip 12 and a cover chip 44 may cover the chip 21, as shown in Figures 6 and 7, respectively. There may be a gap 34 between chips 12 and 21, or each chip 12 or 21 and its respective cover 43 or 44.

SAW resonators 11, 18 and 19 may have different operating frequencies and their interrogation may be done by inductive coupling (NFC) of signals 51 of resonator 11 from antenna 13 and signals 52 and 53 of resonators 18 and 19, respectively, from antenna 20 with a sensor reader 55. Signals 51 may represent a frequency of resonator 11. Signals 52 and 53 may represent frequencies of resonators 18 and 19, respectively. Sensor reader 55 may have an antenna 59 for receiving signals 51-53 and have a processor 56. Processor 56 may process signals 51 and 52 into a reading of stress on chip 12. Processor 56 may process signals 52 and 53 into an ambient temperature of chips 12 and 21. Processor 56 may also provide a correction factor as needed to the reading of stress on chip 12.

In some structures noted herein, chip 12 may be virtually the same size in width and length as chip 21.

In order to make the SAW stress detection mechanism, a following technology flow may be utilized.

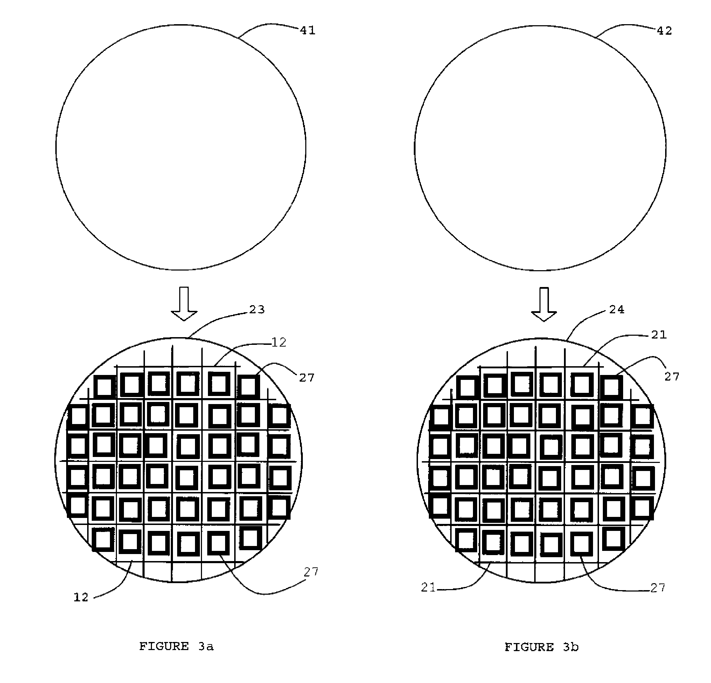

Stage I. Processing of a wafer 23 of Figure 3a, may involve wafer 23 containing a multitude of "first chips" 12 which are designed to be exposed to an external stress, and each chip 12 containing one SAW resonator arrangement 11 and an associated antenna 13, as shown in Figure 1.

The processing at stage I may contain two major steps. The first step may concern a standard IC-like batch processing, where a batch of piezoelectric wafers (quartz, LiNbO3, langasite, and so on) are used for the fabrication of many SAW resonators 11 on each chip 12 of wafer 23. SAW resonator 11 may consist of a comb-like metal interdigitated transducer (IDT) and two groups of metal reflectors, virtually all made by IC-standard initial thin film deposition of a metal 14 followed by metal selective etching to obtain the patterns shown in Figure 1, with resonators 11 oriented on a crystal direction of good strain sensitivity. The second step may concern a sequence of selective direct printing processes, which may be developed in order to obtain an on-chip antenna 13 for chip 12. The processes may consist of a direct-printed Si02-like dielectric layer 15, which can then be followed by a direct print of a metal meander 16 for a fabrication of the coil-like antenna 13 of chip 12 (Figure 1). Virtually all of the meanders of the metal antenna 13 may surround the SAW resonator 11, to avoid any short-circuit between metal traces by means of the isolating dielectric layer 15 deposited in the cross-over region. The upper portion of Figure 1 may be noted as a perspective view of chip 12 and the lower portion of Figure 1 shows a cross-section view A-A' of chip 12.

Stage II. This stage may involve a processing of wafers 24 (Figure 3b), containing a multitude of "second chips" 21, where each chip 21 may contain the SAW resonators 18 and 19 connected electrically in parallel and to the same antenna 20 of chip 21.

The processing at stage II may contain the two major steps as described above, which are not necessarily repeated in detail here. Figure 2 shows a perspective view of a schematic of the two SAW resonators 18 and 19 connected electrically to their joint antenna 20. While the upper portion of Figure 2 may be noted as a perspective view of chip 21, the lower portion of Figure 2 shows a cross-section view B-B' of chip 21.

Stage III. This stage may involve chip-to-wafer bonding, where each chip 12 is diced from wafer 23 and bonded to a chip 21 of wafer 24 (Figures 3a and 3b). The process flow of stage III may proceed as in the following.
1. Dicing the chips 12 from wafer 23 by standard dicing technology.
2. Use the screen printing technology for applying the elastomeric sealant 27 from Figures 3a, 3b, 4 and 5 (like RTV silicone) as a rectangular paste wall, on the inner part of each chip 21 on virtually the entire wafer 24. Thus, no metal path will necessarily remain outside the sealant.
3. Pick and place each chip 12 on each chip 21 of the wafer 24.
4. Annealing of the bonded chips 12 and 21 at 40 degrees C., in humid air for three hours to get a well sealed tandem pair of SAW chips 12 and 21.
5. Dicing the wafer 24 in order to separate the 12-21 chip pairs from wafer 24. A 12-21 chip pair 26 may be shown in Figure 4.

The zero-level packaged tandem chips 12 and 21 as a pair 26 may further be molded in a layer of elastomeric sealant 29, in order to obtain a thick film package to be further used as a first order package 31 as shown in Figure 5.

In another approach, each of the chips 12 and 21 may be separately packaged by zero-level wafer level packaging technology, where a wafer-to-wafer bonding technology is used as follows. Thus, a cover wafer 41 may be bonded to wafer 23 containing the chips 12, as shown in Figure 3a, by using specific screen printing and dicing technologies, in order to obtain chips 12 with covers 43 resulting in packages 57. Similarly, a cover wafer 42 may be bonded to wafer 24 containing the chips 21, as shown in Figure 3b, by using screen printing technology and dicing, in order to obtain a multitude of chips 21 with covers 44 resulting in packages 58.

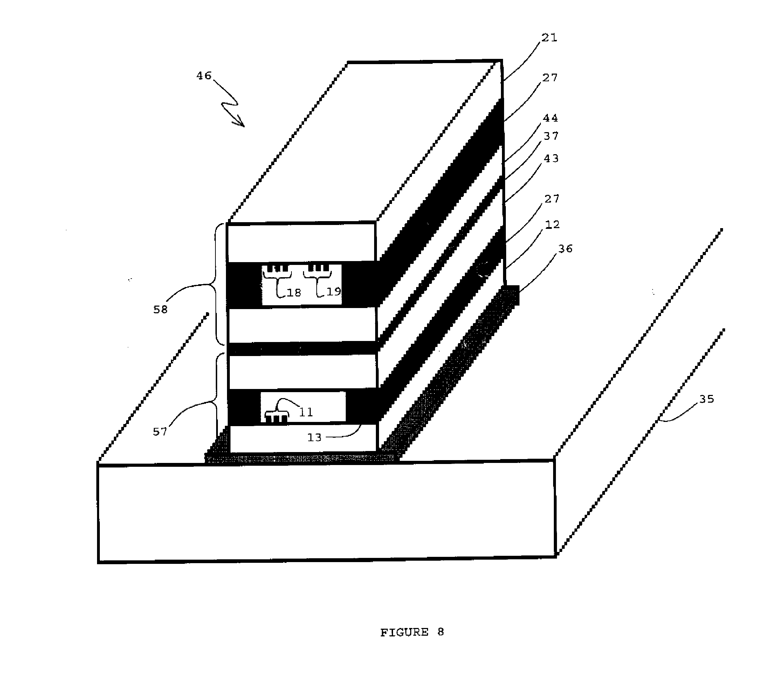

Chip 12 and cover 43 bonded together as package 57, as shown in Figure 6, and chip 21 and cover 44 bonded together as package 58, as shown in Figure 7, may be positioned one over the other, with cover 44 of chip 21 lying on cover 43 of chip 12, and having again an elastomeric sealant-adhesive thick layer 37 used for bonding covers 43 and 44 together to result in a package-to-package package 46, as shown in Figure 8.

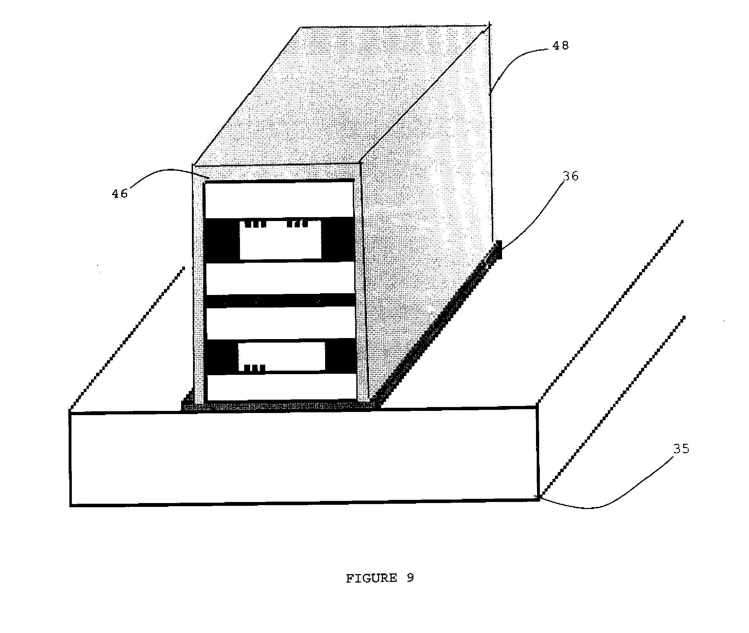

An elastomeric sealant-based final thick film 48 may be applied to package 46, as shown in Figure 9. A stress transmission layer 36 may be attached to an asset 35 to be monitored, and attached to the SAW strain gauge of package 46, is shown in Figures 8 and 9.

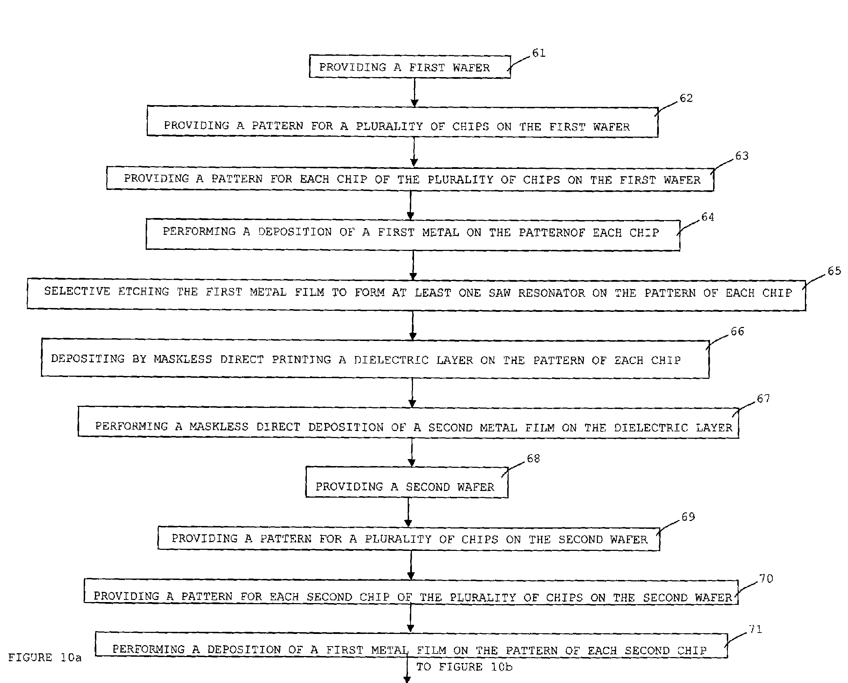

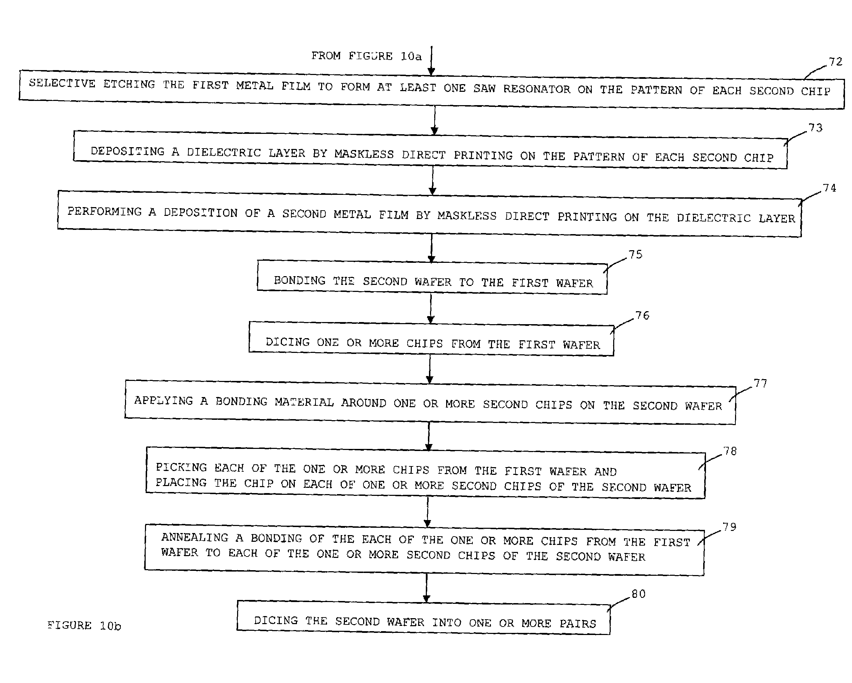

Figures 10a and 10b reveal an approach for fabricating a SAW strain gauge. The approach for fabricating a differential strain gauge, may incorporate providing 61 a first wafer, providing 62 a pattern for a plurality of chips on the first wafer, providing 63 a pattern for each chip of the plurality of chips on the first wafer, performing 64 a deposition of a first metal film on the pattern of each chip, selective etching 65 the first metal film to form at least one surface acoustic wave (SAW) resonator on the pattern of each chip, depositing 66 by maskless direct printing a dielectric layer on the pattern of each chip, and performing 67 a maskless direct deposition of a second metal film on the dielectric layer.

The approach may also incorporate providing 68 a second wafer, providing 69 a pattern for a plurality of second chips on the second wafer, providing 70 a pattern for each second chip of the plurality of chips on the second wafer, performing 71 a deposition of a first metal film on the pattern of each second chip, selective etching 72 the first metal film to form at least one SAW resonator on the pattern of each second chip, depositing 73 a dielectric layer by maskless direct printing on the pattern of each second chip, and performing 74 a deposition of a second metal film by maskless direct printing on the dielectric layer, connected to the resonator on each second chip. Each second chip may be virtually the same size in width and length as each chip of the first wafer.

The approach may also incorporate bonding 75 the second wafer to the first wafer. Each chip of the first wafer may be aligned with and bonded to a second chip of the second wafer. The first and second wafers may be diced to result in pairs of a chip of the first wafer and a second chip of the second wafer bonded to each other. The chip of the first wafer and the second chip of the second wafer may be bonded to each other with an elastomeric sealant.

The approach may also incorporate dicing 76 one or more chips from the first wafer, applying 77 a bonding material around one or more second chips on the second wafer, and picking 78 each of the one or more chips from the first wafer and placing the chip on each of one or more second chips of the second wafer. Each of the one or more chips from the first wafer may be bonded to each of the one or more second chips of the second wafer.

The approach may also incorporate annealing 79 a bonding of the each of the one or more chips from the first wafer to each of the one or more second chips of the second wafer, and dicing 80 the second wafer into one or more pairs. Each of the one or more pairs may have a chip from the first wafer bonded to a second chip of the second wafer.

U.S. Application No. 12/949,113, filed November 18, 2010, and entitled "A System for Monitoring Structural Assets", is hereby incorporated by reference. In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the prior art to include all such variations and modifications.

## Claims

1. A differential strain sensor comprising:
a first chip;
a first surface acoustic wave (SAW) resonator on the first chip;
a second chip; and
a second SAW resonator on the second chip; and
wherein:
the first chip is subject to stress to be detected;
the second chip is subject to virtually no stress to be detected;
the first resonator has a frequency that varies relative to a change of stress on the first chip;
the second resonator has a frequency that varies relative to a change of stress on the second chip;
a difference in frequencies of the first and second resonators is indicative of the stress detected;
the first chip comprises first antenna connected to a frequency output of the first resonator; and
the second chip comprises a second antenna connected to a frequency output of the second resonator.

2. The sensor of claim 1, further comprising:
a third SAW resonator on the second chip; and
wherein:
the second resonator has a first temperature coefficient of frequency;
the third resonator has a second temperature coefficient of frequency; and
the first temperature coefficient of frequency is unequal to the second temperature coefficient of frequency; and
wherein:
a difference of a frequency of the second resonator and a frequency of the third resonator is indicative of an ambient temperature of the first and second chips;
the first resonator has a third temperature coefficient; and
the difference in frequencies of the first and second resonators indicative of the stress detected is corrected according to the ambient temperature of the first and second chips.

3. The sensor of claim 1, wherein:
the first chip is bonded with a first material to the second chip to result in a chip tandem assembly; and
the first material virtually isolates stress affecting the first chip from affecting the second chip.

4. The sensor of claim 3, wherein the chip tandem assembly is packaged with a coating of an elastic type of sealant.

5. The sensor of claim 1, further comprising:
a first cover layer bonded to the first chip with a first material at a perimeter of the first chip and a perimeter of the first cover, with a gap within the perimeters between the first chip and the first cover, resulting in a first chip package;
a second cover layer bonded to the second chip with the first material at a perimeter of the second chip and a perimeter of the second cover, with a gap within the perimeters between the second chip and the second cover, resulting in a second chip package; and
a layer of material, between a side of the first cover opposite of a side of the first cover facing the first chip and a side of the second cover opposite of a side of the second cover facing the second chip, which bonds the first chip package and the second chip package to each other, resulting in a package-to-package package.

6. The sensor of claim 5, further comprising:
a coating of the first material formed on the package-to-package package; and
wherein the first material comprises an elastic type of sealant.

7. A wireless SAW differential strain gauge comprising:
a first chip
a first surface acoustic wave (SAW) resonator situated on the first chip;
a second chip; and
a second SAW resonator situated on the second chip; and
wherein:
the first resonator is exposed to stress;
the second resonator is unexposed to stress; and
the stress is determined from a difference of a resonant frequency of the first resonator and a resonant frequency of the second resonator.

8. The gauge of claim 7, further comprising:
a third resonator situated on the second chip; and
wherein:
the second resonator has an axis of orientation;
the third resonator has an axis of orientation; and
the axis of orientation of the second resonator is at an angle relative to the axis of orientation of the third resonator.

9. The gauge of claim 8, wherein a difference of the resonant frequency of the second resonator and a resonant frequency of the third resonator provides a differential temperature measurement.

10. The gauge of claim 9, wherein the differential temperature measurement is a basis for temperature compensation of the difference of the resonant frequency of the first resonator and the resonant frequency of the second resonator.

11. The gauge of claim 7, further comprising:
a first antenna formed on the first chip and connected to the first resonator; and
a second antenna formed on the second chip and connected to the second resonator and the third resonator.

12. The gauge of claim 11, wherein:
a signal on the first antenna indicates the resonant frequency of the first resonator; and
a signal on the second antenna indicates the resonant frequencies of the second resonator and the third resonator.

13. The gauge of claim 12, further comprising a sensor reader for wireless detection of the signal on the first antenna, and the signal on the second antenna.

14. The gauge of claim 13, wherein the wireless detection is via an inductive coupling between the sensor reader and the first and second antennas.

15. The gauge of claim 7, wherein the first resonator is exposed to stress via a stress transmission layer attached to the first chip and to an asset to be monitored.
